# EUROPEAN PATENT APPLICATION

(11) **EP 2 362 475 A1**
(43) Date of publication of application: **31.08.2011**
(21) Application number: 10001715.1
(22) Date of filing: 19.02.2010
(51) Int. Cl.: H01M 8/06, B01D 53/00

(54) **Method and system for purification of gas streams for solid oxide cells**

(71) Applicant: Technical University of Denmark, 2800 Kgs. Lyngby (DK)
(72) Inventor: Ebbesen, Sune D., 2200 Copenhagen N (DK); Mogensen, Mogens, 3540 Lynge (DK)
(74) Representative: Grünecker, Kinkeldey, Stockmair & Schwanhäusser Anwaltssozietät

(57) **Abstract**

The present invention provides in embodiments a method for purification of inlet gas streams for a solid oxide cell operated in both, electrolysis and fuel cell mode, the solid oxide cell comprising at least a first electrode, an electrolyte and a second electrode, the method comprising the steps of:
- providing at least one scrubber in the gas stream at the inlet side of the first electrode of the solid oxide cell; and/or providing at least one scrubber in the gas stream at the inlet side of the second electrode of the solid oxide cell; and
- purifying the gas streams towards the first and second electrode;

wherein the at least one scrubber in the gas stream at the inlet side of the first electrode and/or the at least one scrubber in the gas stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas stream is purified with the at least one scrubber.

## Description

### Field of the invention

The present invention relates to a method and system for purification of inlet gas streams for solid oxide cells. More specifically, the present invention relates to a method and system for purification of gas streams to the electrodes of a solid oxide cell by removal of impurities which may poison the grain boundaries and reactive electrode sites in solid oxide cells (SOCs). The present invention also relates to the use of a scrubber for the purification of the gas streams to the electrodes of a solid oxide cell.

### Background of the invention

In advanced electrocatalytic systems, as found in solid oxide cells, the surface chemistry plays a significant role during operation, and the presence of impurities/additives on the respective surfaces has a major influence on the overall performance and durability of the device.

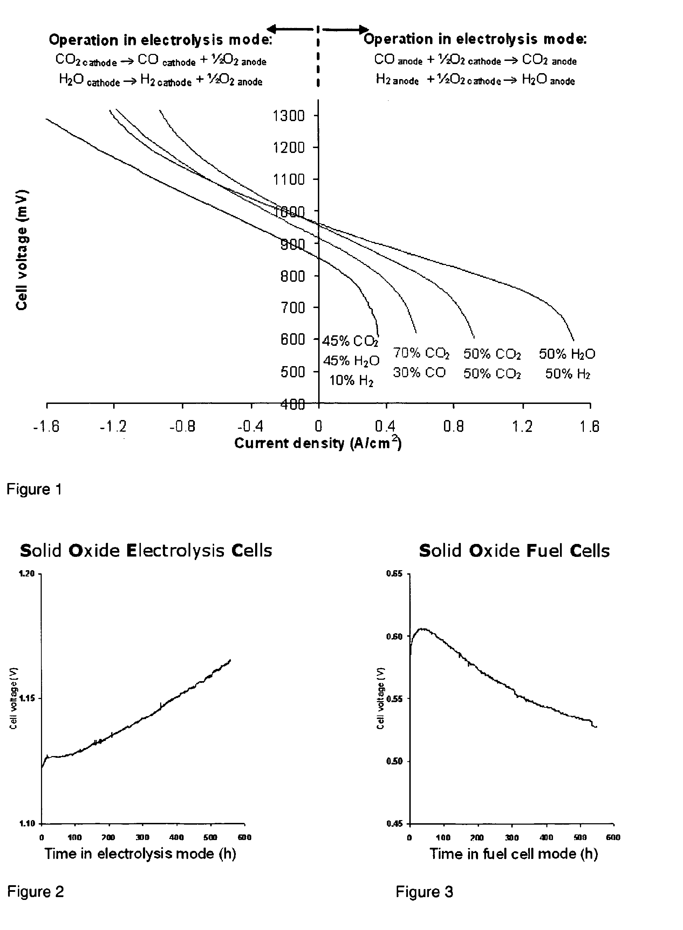

Solid oxide cells as an example of an electrocatalytic system generally include cells designed for different applications, such as solid oxide fuel cells (SOFCs), solid oxide electrolysis cells (SOECs), or membranes. Due to their common basic structure, including as basic components an electrolyte layer sandwiched by two electrode layers, i.e. an anode layer and a cathode layer, the same cell may be designed so as to be used in SOFC applications as well as SOEC applications. SOC is thus the generic term for Solid Oxide Fuel Cell (SOFC) and Solid Oxide Electrolysis Cell, which is basically an identical cell which can work reversible in both modes, as a SOFC and as a SOEC. In the SOFC mode, fuel is fed into the cell and converted into power, while in SOEC mode, power is applied to produce fuel, as illustrated in Figures 1 and 2. These cells are therefore referred to as 'reversible' SOCs.

In operation in the electrolysis mode, for example the following reactions take place at the electrodes:
CO₂ Cathode -> CO_{cathode} + ½ O₂ Anode
H₂O Cathode -> H₂ Cathode + ½ O₂ Anode and
CO Anode + ½ O₂ Cathode -> CO₂ Anode
H₂ Anode + ½ O₂ Cathode -> H₂O Anode

In Figure 1, the cell voltage vs current density is illustrated for mixtures of 45% CO₂, 45% H₂O and 10 H₂; 70% CO₂ and 30% CO; 50% CO₂ and 50% CO; and 50% H₂O and 50 H₂.

During operation of a solid oxide cell, oxygen ions are formed from the provided oxygen-containing gas, such as air, O₂, CO₂ or H₂O, at the electrode functioning as the cathode, which migrate through the electrolyte layer to combine with the provided gas at the electrode functioning as the anode. The in fact electrochemically active region is however limited to reactive electrode sites within the porous electrodes, so-called triple phase boundaries, where electrolyte material, gas and electrode material (anode or cathode) functioning as a catalyst are present at the same time.

The presence of various impurities contained in the gasses fed towards each electrode can disadvantageously result in a decrease in conductivity due to the location in the grain boundaries, a decrease in the catalytic activity due to blocking of the triple phase boundaries and even a delamination of the device due to weakening of the interface, thermal stresses and possible phase changes during operation. The impurities must therefore be removed from the inlet gasses prior to contact with the cell components.

Other unwanted contaminants naturally present in carbonaceous materials include species comprising sulphur, chlorine, phosphor, and further NH₃, and alkali macromolecules. Removal of these harmful species is however energy and space demanding due to different means for filtering said purification means being required, and cost intensive.

The removal of sulphur containing species, most prominently H₂S and COS, is often carried out by wet scrubbing with alkaline solutions. As the feed streams applied for solid oxide cells may contain CO₂ as the reactant, special requirements apply for these gas streams, and only selective adsorption/adsorption can be applied. Suitable adsorbents are components including Ca (∼50ppm), Mn (∼5 ppm), Fe (∼1 ppm), Ni (<0.1 ppm), Cu (<1 ppm), Zn (<0.3 ppm), with the final H₂S concentration in the purified gas stream achievable in brackets. Most of these sorbents can however not be regenerated and must be disposed after use.

Removal processes for chlorine and phosphor include two general methods, i.e. dry and wet processes. In the dry process, the impurities are removed with an adsorbent, while in the wet process the impurities are removed with a scrubbing liquid. For dry removal, two types of adsorbents are commercially available, usually based on sodium or calcium oxides, with which impurity concentrations can be reduced to below 1 ppm. The wet scrubbing process is usually based on alkaline water solutions. Disadvantageously, wet scrubbing will not only remove chlorine and phosphor, but also other components, such as CO₂. As the feed streams applied for SOCs may contain CO₂, as the reactant wet scrubbing is thus not suitable for the cleaning of gas stream for SOCs.

As various impurities have to be removed prior to the gas entering the solid oxide cell, disadvantageously, different purification steps are necessary for each impurity since not all impurities can be reliably removed with only one purification process, which is cost and labour intensive. Moreover, the prior art only focuses on the main impurities known to be present in the inlet gas. However, up to date, little is known about other impurities also contained in the inlet gas, which may enter the cell so far unfiltered but nevertheless contribute to electrode poisoning, thereby reducing the lifetime of the cell.

In view of the above, there is a strong desire to reduce the amount of impurities at the grain boundaries and reactive electrode sites in order to improve the overall performance of the device in a more cost effective way.

### Object of the invention

It was the object of the present invention to provide a method and system for purification of gas streams to the electrodes of a solid oxide cell by removal of impurities which may poison the grain boundaries and reactive electrode sites in solid oxide cells.

### Brief description of the invention

The present invention provides in embodiments a method for purification of gas streams for a solid oxide cell, the solid oxide cell comprising at least a first electrode, an electrolyte and a second electrode, the method comprising the steps of:
- providing at least one scrubber in the gas stream at the inlet side of the first electrode of the solid oxide cell; and/or providing at least one scrubber in the gas stream at the inlet side of the second electrode of the solid oxide cell; and
- purifying the gas streams towards the first and second electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

More specifically, the present invention provides in embodiments a method for purification of gas streams for a solid oxide cell, the solid oxide cell comprising at least a first electrode, an electrolyte and a second electrode, the method comprising the steps of:
- providing at least one scrubber in the gas stream at the inlet side of the first electrode of the solid oxide cell; and/or providing at least one scrubber in the gas stream at the inlet side of the second electrode of the solid oxide cell; and
- purifying the gas streams towards the first and second electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas stream is purified with the at least one scrubber.

The present invention further provides a system for purification of gas streams for solid oxide cells, comprising
- a solid oxide cell, comprising
   - a first electrode;
   - an electrolyte; and
   - a second electrode;
- a gas inlet towards the first electrode;
- a gas inlet towards the second electrode;
- a purification means comprising at least one scrubber located in the gas inlet of the first electrode; and/or a purification means comprising at least one scrubber located in the gas inlet of the first electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

More specifically, the present invention further provides a system for purification of gas streams for solid oxide cells, comprising
- a solid oxide cell, comprising
   - a first electrode;
   - an electrolyte; and
   - a second electrode;
- a gas inlet towards the first electrode;
- a gas inlet towards the second electrode;
- a purification means comprising at least one scrubber located in the gas inlet of the first electrode; and/or a purification means comprising at least one scrubber located in the gas inlet of the first electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

The present invention moreover relates to the use of at least one scrubber in the gas stream at the inlet side of a first and/or a second electrode of a solid oxide cell for purifying the gas streams towards the first and/or second electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

Preferred embodiments are set forth in the subclaims.

### Brief description of the Figures

Figure 1 illustrates the cell voltage vs current density is illustrated for mixtures of 45% CO₂, 45% H₂O and 10 H₂; 70% CO₂ and 30% CO; 50% CO₂ and 50% CO; and 50% H₂O and 50 H₂.
Figure 2 illustrates influence of impurities on the durability of a solid oxide cell in accordance with the present invention, i.e. the degradation of a solid oxide cell operated in the electrolysis mode as a result of an increased cell voltage.
Figure 3 illustrates influence of impurities on the durability of a solid oxide cell in accordance with the present invention, i.e. the degradation of a solid oxide cell operated in the electrolysis mode as a result of a decreased cell voltage.
Figure 4 is a comparison of the cell voltage over time of a solid oxide electrolysis cell being provided with CO₂/CO as a fuel gas purified in accordance with the method of the present invention, as compared to CO₂/CO as a fuel gas purified with standard methods known in the art.
Figure 5 is a comparison of the cell voltage over time of a solid oxide electrolysis cell being provided with H₂O/H₂ as a fuel gas purified in accordance with the method of the present invention, as compared to f H₂O/H₂ as a fuel gas purified with standard methods known in the art.
Figure 6 is a comparison of the cell voltage over time of a solid oxide fuel cell being provided with H₂O/H₂ as a fuel gas purified in accordance with the method of the present invention, as compared to fuel gas purified with standard methods known in the art.

### Detailed description of the invention

The present invention generally relates to the purification of gas streams at least at the inlet sides to the electrode(s) of a solid oxide cell, wherein the gas streams are purified due to contact with a material comprising triple phase boundaries similar to or identical to the triple phase boundaries of the respective electrodes. Any impurities capable of poisoning the active sites of the electrodes are effectively removed from the gas stream due to their affinity to the triple phase boundaries in the material used for the purification.

More specifically, the present invention provides a method for purification of gas streams for a solid oxide cell, the solid oxide cell comprising at least a first electrode, an electrolyte and a second electrode, the method comprising the steps of:
- providing at least one scrubber in the gas stream at the inlet side of the first electrode of the solid oxide cell; and/or providing at least one scrubber in the gas stream at the inlet side of the second electrode of the solid oxide cell; and
- purifying the gas streams towards the first and second electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

Advantageously, with the method of the present invention, the gas towards the solid oxide cell is purified with regard to all critical impurities which cause degradation of the solid oxide cells by blocking the active triple-phase boundary sites without the need to be fine-tuned towards a specific identified impurity. Thus, despite the use of only one scrubber comprising a material suitable as an electrolyte material and a material suitable as an electrode material, the gas stream can be purified of all impurities still remaining in the gas stream purified with means known in the art so far, which is also advantageous in today's desire to minimize systems in terms of space and weight requirements. More specifically, the scrubber in the gas stream at the inlet side of the first electrode of the solid oxide cell and/or in the gas stream at the inlet side of the second electrode of the solid oxide cell comprises material suitable as an electrolyte material and a material suitable as an electrode material, thereby forming a structure resembling the reactive sites, i.e. triple phase boundaries similar to or identical to the respective reactive sites of the electrodes. Any impurity which would poison reactive sites in the electrodes will instead be adsorbed in the respective structure of the scrubber, being effectively removed from the inlet gas towards the electrode.

The method of the present invention thus provides a cost effective way of prolonging the life time of a solid oxide cell without the need to further modify the materials of the cell, i.e. the need to make the cell more resilient towards impurities. This in return allows for more freedom regarding the cell materials without compromising the durability of the cell.

The scrubber employed in the method (and system) of the present invention is a porous material comprising gas passage ways, for example a monolithic honeycomb structure. The gas to be purified passes the porous material on its way to the respective electrode. Since the scrubber comprises a material suitable as an electrolyte material and a material suitable as an electrode material for a solid oxide cell, the scrubber comprises a structure comprising triple phase boundaries formed of the electrolyte material, the electrode material and the gas in accordance with the triple phase boundaries in the electrode layers of a solid oxide cell.

Due to the similar or identical structure, the impurities will be deposited in the scrubber material before entering the solid oxide cell, i.e. the need to make the cell more resistant against impurities. This in return allows for more freedom regarding the cell materials without compromising the durability of the cell.

In a preferred embodiment, the scrubber in the gas stream at the inlet side of the first electrode comprises the same material as the first electrode, and/or the scrubber in the gas stream at the inlet side of the second electrode comprises the same material as the second electrode.

Most preferred is the scrubber material either contains identical triple-phase boundary sites, i.e. the same material as the respective electrode, or that the scrubber material contains triple-phase boundary sites, which are even "less tolerant", i.e. more reactive towards impurities than the actual electrodes.

For the fuel-gas stream, for example a mixture comprising H₂/H₂O, CO/CO₂, CH₄, the application of a material that is less tolerant towards impurities includes Ni/Yttria Stabilized Zirconia YSZ, preferred for a Ni/ Scandia doped Yttria Stabilised Zirconia ScYSC cermet electrode. The cheaper Ni/YSZ material is less tolerant towards some impurities than the more expensive Ni/ScYSZ material. Therefore, in relation to adsorption capacity and price, a most preferred material for SOCs is a scrubber comprising Ni/YSZ for stacks with an active Ni/ScYSZ electrode.

For the oxidant-gas stream, for example air or O₂, materials including Lanthanum Strontium Manganite LSM/YSZ or Lanthanum Strontium Cobalt Ferrite LSCF/YSZ may be applied. The gas-cleaning capability for impurities such as sulphur, chlorine and phosphor may further be improved by addition of oxides selected from the group consisting of Na, Ca, Mn, Fe, Ni, Cu, Zn or Ce.

More specific examples of suitable materials include, without limiting the application thereto, for cleaning of the fuel-gas stream (H₂/H₂O, CO/CO₂, CH₄):
The active material in the scrubber for the fuel-gas stream may be Ni/YSZ or Ni/ScYSZ with an average particle size of around 2 µm, corresponding to the average particle size in the SOC.
The active material in the scrubber for the fuel-gas stream may be Ni/YSZ or Ni/ScYSC with the addition of at least one of the materials selected from the group of Na, Ca, La, Zr, Nb, Cr, Mn, Fe, Cu, Ni, Cu, Zn, Al, Si or Ce and alloys thereof with an average particle size of around 2 µm, corresponding to the average particle size in the SOC.
The active material in the scrubber for the fuel-gas stream may be Ni/YSZ or Ni/ScYSC. Because there are no restrictions to electronic or ionic conductivity, the average particle size can be smaller than 2 µm to increase the length of the active sites.
The active material in the scrubber for the fuel-gas stream may be Ni/YSZ or Ni/ScYSC with the addition of materials selected from the group of Na, Ca, La, Zr, Nb, Cr, Mn, Fe, Cu, Ni, Cu, Zn, Al, Si or Ce and alloys thereof. Because there are no restrictions to electronic or ionic conductivity, the average particle size can be smaller than 2 µm to increase the length of the active sites.

More specific examples of suitable materials include, without limiting the application thereto, for the cleaning of the oxidant-gas stream:
The active material in the scrubber for the oxidant-gas stream may be LSM/YSZ (Lanthanum Strontium Manganite / Yttria Stabilised Zirconia) or LSCF/YSZ (Lanthanum Strontium Cobaltite Ferrite / Yttria Stabilised Zirconia) with an average particle size of around 2 µm; corresponding to the average particle size in the SOC.
The active material in the scrubber for the oxidant-gas stream may be LSM/YSZ or LSCF/YSZ with the addition of materials selected from the group of Na, Ca, La, Zr, Nb, Cr, Mn, Fe, Cu, Ni, Cu, Zn, Al, Si or Ce and alloys thereof with an average particle size of around 2 µm, corresponding to the average particle size in the SOC.
The active material in the scrubber for the oxidant-gas stream may be LSM/YSZ or LSCF/YSZ. Because there are no restrictions to electronic or ionic conductivity, the average particle size may be smaller than 2 µm to increase the length of the active sites. The active material in the scrubber for the oxidant-gas stream may be LSM/YSZ or LSCF/YSZ with the addition of materials selected from the group of Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, Ni, Fe, NdNiO, LaSrSiO, BSC, SmSr(Co,Fe,Ni)O, YBaCoO, SrCoSbO, SrTiFeO, SrScCoO, LaSrCoNiO, stabilized zirconia (YSZ, ScYSZ), doped ceria (ceria doped with gadolinium (CGO), samarium, lanthanum, yttrium, ytterbium and/or neodymium); strontium/magnesium/barium-doped lanthanum gallate (LSGM,LBGM, LSGM-Co or LSGM-Fe); BaCeO₃ doped with samarium, neodymium and/or ytterbium), and mixtures thereof. Because there are no restrictions to electronic or ionic conductivity, the average particle size may be smaller than 2 µm to increase the length of the active sites.

As can be seen from Figures 3 to 6, the elimination of impurities in the gas stream towards a solid oxide cell operated in either electrolysis or fuel cell mode is demonstrated. In case of a solid oxide electrolysis cell, the measured cell voltage increases drastically less over time, as compared to an identical cell without the additional purification in accordance with the method of the present invention. In case of a solid oxide fuel cell, the measured cell voltage only slightly decreases over time, as compared to the same cell without the additional purification in accordance with the method of the present invention.

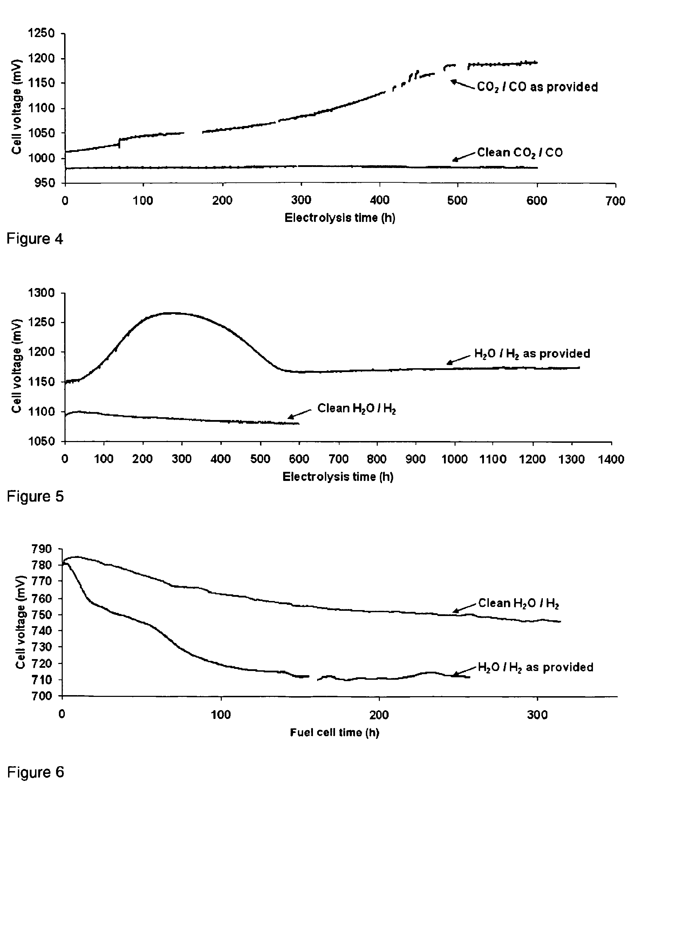

Figure 4 is a comparison of the cell voltage over time of a solid oxide cell operated in electrolysis mode being provided with CO₂/CO as a fuel gas purified in accordance with the method of the present invention, as compared to CO₂/CO as a fuel gas purified with standard methods known in the art. The measurement was carried out under conditions of 850°C, -0.25 A/cm², 70% CO₂/30% CO. As is evident from the Figure, the cell voltage advantageously increases less over time when the provided fuel gas is additionally purified in accordance with the method of the present invention, as compared to the same cell under identical conditions but without the additional purification.

Figure 5 is a comparison of the cell voltage over time of a solid oxide cell operated in electrolysis mode being provided with H₂O/H₂ as a fuel gas purified in accordance with the method of the present invention, as compared to H₂O/H₂ as a fuel gas as provided after being purified with standard methods known in the art. The measurement was carried out under conditions of 850°C, -0.50 A/cm², 50% H₂O/50% H₂. As is evident from the Figure, the cell voltage advantageously increases less over time when the provided fuel gas is additionally purified in accordance with the method of the present invention, as compared to an identical cell under identical conditions but without the additional purification.

As can be seen from Figure 6, the cell voltage over time of a solid oxide cell operated in fuel cell mode being provided with H₂O/H₂ as a fuel gas purified in accordance with the method of the present invention advantageously decreases less as compared to gas purified with standard methods known in the art. The measurement was carried out under conditions of 750°C, 0.75 A/cm², 40% H₂O/60 % H₂.

In a further preferred embodiment of the method of the present invention, the scrubber in the gas stream at the inlet side of the first electrode and/or the scrubber in the gas stream at the inlet side of the second electrode of the solid oxide cell is operated at the same temperature, or slightly below, as the operation temperature of the first and/or second electrode. This ensures an optimal purification of the gas stream as the material comprised in the scrubber shows the same chemical and electrochemical behaviour as the electrode material of the SOC.

The present invention further provides a system for purification of gas streams for solid oxide cells, comprising
- a solid oxide cell, comprising
   - a first electrode;
   - an electrolyte; and
   - a second electrode;
- a gas inlet towards the first electrode;
- a gas inlet towards the second electrode;
- a purification means comprising at least one scrubber located in the gas inlet of the first electrode; and/or a purification means comprising at least one scrubber located in the gas inlet of the first electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material.

As indicated above in connection with the method of the present invention, advantageously, the scrubbers in the gas stream of the system purify the gas with regard to all critical impurities which cause degradation of the solid oxide cells by blocking the active triple-phase boundary sites without the need to be fine-tuned towards a specific identified impurity. Thus, only one scrubber can effectively purify the gas stream of all impurities, which is also positive in today's desire to minimize systems in terms of space and weight requirements.

Furthermore, the scrubbers are attached to the solid oxide cell system in the gas streams without forming a part of the SOC, and can therefore be easily replaced if required without the need to handle the cell stack as such. Therefore, if the purification efficiency of a scrubber decreases below as desired minimum, a simple exchange of the scrubbers can be carried out in a time efficient manner, thereby prolonging the lifetime of the cell while offering a replacement of a cheap part of the system, making the system overall more cost effective.

In a preferred embodiment, the scrubber in the gas stream at the inlet side of the first electrode comprises the same material as the first electrode, and/or the scrubber in the gas stream at the inlet side of the second electrode comprises the same material as the second electrode.

Most preferred is the scrubber material either contains identical triple-phase boundary sites, i.e. the same material as the respective electrode, or that the scrubber material contains triple-phase boundary sites, which are even "less tolerant", i.e. more reactive towards impurities than the actual electrodes.

As for the preferred materials, the same materials indicated above in connection with the method of the invention are preferably used in the system as well.

In another preferred embodiment the system further comprises a pre-reformer. By combining the system comprising the scrubbers with a pre-reformer, advantageously the whole system can be built more compact, which allows for a space and weight reduction of the system. More preferred is the purification means comprising at least one scrubber located in the gas inlet of the first electrode or in the gas inlet of the second electrode as part of the pre-reformer. Since pre-reformers are commercially available in various embodiments, and the scrubber are preferably fine-tuned towards the electrode materials of the SOC to be used, it is preferable to combine the fine-tuned system with a commercially available pre-reformer since cheap pre-reformers can be used without further adaption to the cells.

Advantageously, with the method and system of the present invention, impurities of electrochemically active sites of a solid oxide cell can be effectively removed from the gas streams towards the electrodes of the cell, resulting in the solid oxide cell having a prolonged lifetime and increased performance over time.

The method of the present invention advantageously results in the immobilization and removal of impurities from grain boundaries and reactive electrode sites in solid state electrochemical devices in a simple and very efficient way, making the process more cost effective while allowing for an improved SOC life time as compared to the SOC's of the prior art, and allowing for a reduction of space and weight required for the removal of impurities as compared to the prior art.

The present invention moreover relates to a scrubber for use in the gas stream at the inlet side of a first and/or a second electrode of a solid oxide cell for purifying the gas streams towards the first and/or second electrode;
wherein the scrubber in the gas stream at the inlet side of the first electrode and/or the scrubber in the gas stream at the inlet side of the second electrode comprises a material suitable as an electrolyte material and a material suitable as an electrode material.

Finally, the present invention relates to the use of a composition comprising a material suitable as an electrolyte material and a material suitable as an electrode material as a scrubber suitable for the purification of gas streams in solid oxide cells.

Preferably, the at least one scrubber in the gas stream at the inlet side of the first electrode comprises the same material used as the electrolyte material and electrode material in the first electrode. Also preferred is the scrubber in the gas stream at the inlet side of the second electrode comprising the same material used as the electrolyte material and electrode material in the second electrode.

As for the preferred materials, the same materials indicated above in connection with the method and system of the invention are preferably employed in this embodiment as well.

## Claims

1. Method for purification of gas streams in a solid oxide cell, the solid oxide cell comprising at least a first electrode, an electrolyte and a second electrode, the method comprising the steps of:
- providing at least one scrubber in the gas stream at the inlet side of the first electrode of the solid oxide cell; and/or providing at least one scrubber in the gas stream at the inlet side of the second electrode of the solid oxide cell; and
- purifying the gas streams towards the first and second electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas stream is purified with the at least one scrubber.

2. The method of claim 1, wherein the scrubber in the gas stream at the inlet side of the first electrode comprises the same material used as the electrolyte material and electrode material in the first electrode.

3. The method of claim 1 or 2, wherein the scrubber in the gas stream at the inlet side of the second electrode comprises the same material used as the electrolyte material and electrode material in the second electrode.

4. The method of any one of claims 1 to 3, wherein the material suitable as the electrode material for the at least one scrubber in the gas stream at the inlet side of the first electrode and/or the at least one scrubber in the gas stream at the inlet side of the second electrode is selected from the group consisting of among Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, Ni, Fe, NdNiO, LaSrSiO, BSC, SmSr(Co,Fe,Ni)O, YBaCoO, SrCoSbO, SrTiFeO, SrScCoO, LaSrCoNiO, and mixtures thereof.

5. The method of any one of claims 1 to 4, wherein the electrolyte material suitable for the at least one scrubber in the gas stream at the inlet side of the first electrode and/or the at least one scrubber in the gas stream at the inlet side of the second electrode the active material in the scrubber is selected from the group consisting of YSZ, ScYSZ, ceria doped with gadolinium, samarium, lanthanum, yttrium, ytterbium and/or neodymium; LSGM,LBGM, LSGM-Co, LSGM-Fe; BaCeO₃ doped with samarium, neodymium and/or ytterbium.

6. The method of any one of claims 1 to 5, wherein the scrubber in the gas stream at the inlet side of the first electrode and/or the scrubber in the gas stream at the inlet side of the second electrode of the solid oxide cell is operated at the same temperature as the operation temperature of the first and/or second electrode.

7. A system for purification of gas streams in solid oxide cells, comprising
- a solid oxide cell, comprising
- a first electrode;
- an electrolyte; and
- a second electrode;
- a gas inlet towards the first electrode;
- a gas inlet towards the second electrode;
- a purification means comprising at least one scrubber located in the gas inlet of the first electrode; and/or a purification means comprising at least one scrubber located in the gas inlet of the first electrode;
wherein the at least one scrubber in the gas stream at the inlet side of the first electrode and/or the at least one scrubber in the gas stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas stream is purified with the at least one scrubber.

8. The system of claim 7, wherein the scrubber in the gas stream at the inlet side of the first electrode comprises the same material used as the electrolyte material and electrode material in the first electrode.

9. The system of claim 7 or 8, wherein the scrubber in the gas stream at the inlet side of the second electrode comprises the same material used as the electrolyte material and electrode material in the second electrode.

10. The system of any one of claims 7 to 9, wherein the material suitable as the electrode material for the at least one scrubber in the gas stream at the inlet side of the first electrode and/or the at least one scrubber in the gas stream at the inlet side of the second electrode is selected from the group consisting of among Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, Ni, Fe, NdNiO, LaSrSiO, BSC, SmSr(Co,Fe,Ni)O, YBaCoO, SrCoSbO, SrTiFeO, SrScCoO, LaSrCoNiO, and mixtures thereof.

11. The system of any one of claims 7 to 10, wherein the electrolyte material suitable for the at least one scrubber in the gas stream at the inlet side of the first electrode and/or the at least one scrubber in the gas stream at the inlet side of the second electrode the active material in the scrubber is selected from the group consisting of YSZ, ScYSZ, ceria doped with gadolinium, samarium, lanthanum, yttrium, ytterbium and/or neodymium; LSGM,LBGM, LSGM-Co, LSGM-Fe; BaCeO₃ doped with samarium, neodymium and/or ytterbium.

12. The system of any one of claims 7 to 10, wherein the system further comprises a pre-reformer.

13. The system of claim 12, wherein the purification means comprising at least one scrubber located in the gas inlet of the first electrode or in the gas inlet of the second electrode is part of the pre-reformer.

14. Scrubber for use in the gas stream at the inlet side of a first and/or a second electrode of a solid oxide cell for purifying the gas streams towards the first and/or second electrode;
wherein the scrubber in the gas stream at the inlet side of the first electrode and/or the scrubber in the gas stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas stream is purified with the at least one scrubber.

15. The scrubber of claim 14, wherein the at least one scrubber in the gas stream at the inlet side of the first electrode comprises the same material used as the electrolyte material and electrode material in the first electrode.

16. The scrubber of claim 14, wherein the scrubber in the gas stream at the inlet side of the second electrode comprises the same material used as the electrolyte material and electrode material in the second electrode.

17. Use of a composition comprising a material suitable as an electrolyte material and a material suitable as an electrode material as a scrubber suitable for the purification of gas streams in solid oxide cells.
